# Europäisches Patentamt
## European Patent Office
## Office européen des brevets

(19)

(11) Veröffentlichungsnummer: **0 095 035**
**B1**

(12) ## EUROPÄISCHE PATENTSCHRIFT

(45) Veröffentlichungstag der Patentschrift:
**06.08.86**

(21) Anmeldenummer: **83103661.1**

(22) Anmeldetag: **15.04.83**

(51) Int. Cl.⁴: **C 21 B 13/00, C 10 J 3/08**

(54) **Verfahren zur Kohlegasversorgung eines Hüttenwerkes.**

(30) Priorität: **25.05.82 DE 3219562**

(43) Veröffentlichungstag der Anmeldung:
**30.11.83 Patentblatt 83/48**

(45) Bekanntmachung des Hinweises auf die Patenterteilung:
**06.08.86 Patentblatt 86/32**

(84) Benannte Vertragsstaaten:
**AT BE FR GB IT LU NL SE**

(56) Entgegenhaltungen:
**DE - A - 3 032 822**
**FR - A - 736 736**
**US - A - 3 082 078**
**US - A - 4 329 842**

(73) Patentinhaber: **Klöckner CRA Technologie GmbH,
Klöcknerstrasse 29, D-4100 Duisburg 1 (DE)**

(72) Erfinder: **Chitil, Manfred, Dr. Ing.,
Thorn-Prikker-Strasse 41, D-4150 Krefeld-Bockum (DE)**

(74) Vertreter: **Kador . Klunker . Schmitt-Nilson . Hirsch,
Corneliusstrasse 15, D-8000 München 5 (DE)**

## Beschreibung

Die Erfindung bezieht sich auf ein Verfahren zur Kohlegasversorgung eines industriellen Grossverbrauchers, insbesondere eines Hüttenwerkes, bei dem aus festen oder flüssigen Kohlenstoffträgern unter Zugabe von aus einer Sauerstoffleitung gasförmig bezogenem Sauerstoff und insbesondere in einem Eisenbad ein Kohlegas erzeugt wird und das so erzeugte Kohlegas an Verbraucher, wie z.B. Industrieöfen, Heizungen, Beizen usw. geleitet wird, sowie auf ein Verfahren zur Brenngasversorgung eines Hüttenwerkes oder eines anderen Grossverbrauchers.

Verfahren zur Kohlevergasung im Eisenbadreaktor, von denen die vorliegende Erfindung ausgeht, sind beispielsweise aus der DE-PS 2 520 938 und den DE-OSen 3 031 680 und 3 133 575 bekannt. Weiterhin ist in der DE-OS 2 952 434 ein Kohlevergasungsverfahren beschrieben. Die Verwendung von derartig erzeugten Kohlegasen für hüttenwerkseigene oder externe Verbraucher und entsprechend dem eingangs genannten, bekannten Verfahren wird in der DE-OS 2 733 790 beschrieben. Danach wird aus der im erzeugten Kohlegas enthaltenen, fühlbaren Wärme Dampf erzeugt, mit dem ein Generator betrieben wird. Das gereinigte, gewaschene und gekühlte Kohlegas steht neben einem Einsatz am Eisenbadreaktor (Einblasen) gegebenenfalls für Verbraucher im Hüttenwerk o. dgl. zur Verfügung. Hierzu wird es in einem Gasometer gespeichert.

Bei ausreichender Kohlegaserzeugung ist es möglich, die gesamten hüttenwerkseigenen Gasverbraucher, wie z.B. Industrieöfen, Kraftwerke, Beizen usw., anstelle von wie bisher üblich Erdgas oder Erdöl nun mit Kohlegas zu betreiben. Bei dem aus der DE-OS 2 733 790 bekannten Verfahren zur Kohlegasversorgung eines Hüttenwerkes ist jedoch eine kontinuierliche Versorgung nicht gewährleistet. Bei einer Kohlegaserzeugung im Eisenbadreaktor treten zwangsläufig Ausfall- und Unterbrechungszeiten auf. Nach Anlauf einer gewissen Zeit muss das Eisenbad entleert und das Reaktionsgefäss neu zugestellt werden. Währenddessen ist eine Kohlegaserzeugung in diesem Eisenbadreaktor nicht möglich.

Um die Kohlegasversorgung kontinuierlich aufrechterhalten zu können, wäre ein Verbundnetz mit anderen Hüttenwerken oder Kohlegaserzeugern vorteilhaft oder es müssten mehrere, unabhängige Aggregate zur Kohlegaserzeugung im Hüttenwerk bzw. Kohlegaserzeugungswerk vorhanden sein. Derartige Verbundnetze sind jedoch kostspielig. Mehrere Eisenbadreaktoren sind unwirtschaftlicher als ein grösserer, für die gesamte, benötigte Kohlegasmenge ausreichender Reaktor. Im Endeffekt wird daher die Kohlegasversorgung eines Hüttenwerkes oder eines anderen Grossabnehmers im «Inselbetrieb» folgen, so wie dies z.B. für die Gichtgasversorgung zumeist der Fall ist.

Die angeschlossenen, externen Verbraucher müssen somit gemäss der Lehre der DE-OS 2 733 790 aus der im Gasometer gespeicherten Menge an Kohlegas versorgt werden. Nun sind jedoch die anfallenden bzw. benötigten Kohlegasmengen sehr hoch. Wenn man bedenkt, dass für ein Hüttenwerk eine stündliche Kohlegasproduktion von ca. 120 000 m³ angestrebt wird, kommt man zu Gasometern mit aussergewöhnlich grossem Volumen und somit auch Investitions- und Platzbedarf. Bei Störungen, die über mehrere Stunden andauern oder bei Reparaturen am Aggregat ist eine Bevorratung der während der Störung von den externen Verbrauchern benötigten Kohlegasmenge entsprechend der Lehre der DE-OS 2 733 790 unwirtschaftlich.

Üblicherweise werden die Verbraucher im Rahmen einer Notversorgung daher über andere Energieträger, insbesondere Erdgas, während der Ausfallzeiten versorgt. Dabei erfolgt die Abnahme von Erdgas jedoch zeitlich krass unterschiedlich: Über längere Zeiträume wird praktisch kein Erdgas abgenommen, während der Ausfallzeiten der Kohlegaserzeugung aber werden sehr hohe Erdgasmengen benötigt. Unter diesen Bedingungen ist Erdgas jedoch ein relativ teurer Energieträger. Zudem werden getrennte Gasleitungen oder getrennte Brenner benötigt, es muss von Kohlegas auf Erdgas am Ort des Verbrauchers umgeschaltet werden. Ein Erdgasspeicher, der eine nahezu kontinuierliche Abnahme ermöglichen würde, hätte auf den Energieinhalt bezogen zwar geringere Abmessungen als ein Kohlegasspeicher, wäre aber immer noch so gross und damit teuer, dass er unwirtschaftlich ist. Eine Speicherung in unterirdischen Kavernen ist nur unter bestimmten geologischen Gegebenheiten möglich, die nicht an jedem Ort vorliegen. In beiden Fällen werden zudem neben den hohen Investitionskosten auch erhebliche Energiekosten für die Komprimierungsarbeit zur Speicherung erforderlich.

Aufgabe der Erfindung ist es, ausgehend von dem bekannten Verfahren zur Kohlegasversorgung bzw. Brenngasversorgung grosser Energieverbraucher und insbesondere eines Hüttenwerkes ein Versorgungsverfahren anzugeben, bei dem eine kontinuierliche Gasversorgung der angeschlossenen, externen Verbraucher möglich und wirtschaftlich ist. Diese Aufgabe wird dadurch gelöst, dass für eine kontinuierliche Versorgung der Verbraucher

a) während der Kohlevergasung
– nur ein Teilstrom des erzeugten Kohlegases den Verbrauchern zugeführt wird, während ein anderer Teilstrom des erzeugten Kohlegases verflüssigt und gespeichert wird,
– aus einem Speicher in flüssiger Form gespeicherter Sauerstoff entnommen, bis zur Gasphase erwärmt und dem Eisenbadreaktor zugeleitet wird und
– wobei die zum Aufwärmen des Sauerstoffs notwendige Wärme dem zu verflüssigenden Kohlegas entzogen wird, und

b) bei Ausfall der Kohlevergasung
– die verflüssigte, gespeicherte Kohlemenge nach und nach aufgewärmt und den Verbrauchern zugeführt wird,

– aus der Sauerstoffzuleitung entnommener Sauerstoff verflüssigt und gespeichert wird, und
– wobei für das Aufwärmen des verflüssigten Kohlengases dem zu verflüssigenden Sauerstoff Wärme entzogen wird.

Für eine kontinuierliche Brenngasversorgung wird diese Aufgabe durch die Merkmale des Anspruchs 7 gelöst.

Erfindungsgemäss werden Speicher mit grossen Volumen dadurch umgangen, dass das Kohle- bzw. Brenngas zumindest teilweise verflüssigt und in diesem Zustand gelagert wird. Bekanntlich schrumpft das Gasvolumen bei der Verflüssigung um etwa den Faktor 725, so dass wesentlich kleinere Speicherbehälter für die benötigten Gasmengen ausreichen. Obwohl das Kohle- bzw. Brenngas für diese Flüssigspeicherung abgekühlt werden und für diese Abkühlung Energie aufgebracht werden muss, bleiben die hierfür notwendigen Energiemengen in Grenzen, weil die für die Vergasung des flüssigen gespeicherten Sauerstoffs notwendige Wärme durch das abzukühlende und zu verflüssigende Kohle- bzw. Brenngas geliefert wird. Dabei gibt das Kohle- bzw. Brenngas in einem Wärmetauschprozess seine Wärmeenergie an den flüssigen Sauerstoff ab, wodurch dieser aufgewärmt und gasförmig wird, das Kohle- bzw. Brenngas kühlt sich stark ab. Während Ausfallzeiten der Kohlevergasung wird die flüssig gespeicherte Kohle- oder Brenngasmenge nach und nach aufgewärmt und den einzelnen Verbrauchern zugeführt. Auch für die Aufwärmung wird ein Wärmetauschprozess verwendet, die Aufwärmung des kalten, flüssigen Kohle- oder Brenngases erfolgt durch Wärmetausch mit gasförmigem, zu speicherndem Sauerstoff. In der Kombination mit der Speicherung von Sauerstoff wird daher eine überraschend energiegünstige Möglichkeit geschaffen, das Kohle- bzw. Brenngas in der an sich teuren, nämlich flüssigen Form zu speichern. Die den gasförmigen Sauerstoff in die Sauerstoffversorgungsleitung liefernde Luftzerlegungsanlage kann, muss aber nicht, in Nähe der Kohlegasanlage stehen.

Besonders vorteilhaft bei dem erfindungsgemässen Verfahren ist es, dass auch die Sauerstoffabnahme aus der Sauerstoffzuleitung seitlich praktisch nicht schwankt. Bekannt sind die Kosten für eine Luftzerlegung dann gering, wenn die hierfür verwendete Luftzerlegungsanlage im wesentlichen das Elektronetz bzw. einen anderen Energielieferanten gleichbleibend belastet. Dies ist bei einer kontinuierlichen Sauerstoffabnahme möglich.

Die erfindungsgemässe Verflüssigung eines anderen Brenngases, insbesondere Erdgases, anstelle des selbst erzeugten Kohlegases hat ebenfalls den Vorteil, dass dieses Brenngas kontinuierlich und in gleichbleibenden, zeitlichen Mengen gasförmig eingekauft werden kann und dadurch preisgünstig bezogen wird. Zudem findet die Veflüssigung von Erdgas bei höheren (absoluten) Temperaturen als die Verflüssigung von Kohlegas statt, sie ist somit einfacher durchzuführen als die Verflüssigung von Kohlegas.

Bei Kohlegas ist ein hoher Wasserstoffanteil erwünscht. Typischerweise liegt der Wasserstoffanteil zwischen 10 und 40%. Da nun Wasserstoff erst bei sehr geringen Temperaturen flüssig wird, ist zur Abkühlung von Kohlegas in die flüssige Phase eine relativ niedrige Temperatur erforderlich, die um so näher an 21 K, dem Verflüssigungspunkt von Wasserstoff, liegt, je höher der Wasserstoffanteil ist.

In Weiterbildung der Erfindung wird deshalb vorgeschlagen, den Wasserstoffanteil des Kohlegases gasförmig, die bei höheren Temperaturen siedenden Anteile wie z.B. CO aber in flüssiger Form zu speichern. Dies kann vorzugsweise in ein und demselben Behälter geschehen, da auch der noch gasförmige Wasserstoff eine tiefe Temperatur hat. Dabei ist es auch möglich, die einzelnen Anteile des Kohlegases getrennt voneinander abzuziehen, sie können jedoch auch gemeinsam den Verbrauchern zugeführt werden, was den Vorteil hat, dass einerseits kein zweites Gasleitungsnetz benutzt werden muss und andererseits eine Umstellung an den einzelnen Verbrauchern nicht notwendig ist, da das Brenngas dasselbe bleibt. Mischt man jedoch Wasserstoff und Kohlestoff nicht, so kann das sehr hochwertige Brenngas $H_2$ praktisch rein abgegeben und vielseitig eingesetzt werden. Weiterhin kann aber auch bei einer Mischung diese speziell für den Abnehmer zusammengestellt werden, ein Ausgleich kann über die Verbrennungsanlagen erfolgen.

Vorteilhafterweise werden beim Abkühlen die oberhalb der Verflüssigungstemperatur bereits in den festen Aggregatzustand übergehenden Anteile des Kohlegases, wie z.B. $H_2O$, $H_2S$ und $CO_2$ in einer geeigneten Vorrichtung (z.B. Molsieb oder Revex-Wärmetauscher) bei einer Temperatur etwas unterhalb ihrer jeweiligen Erstarrungstemperatur ausgeschieden. Dadurch wird einerseits das Kohlegas von diesen Ballaststoffen befreit, andererseits können diese Stoffe getrennt und gezielt verwendet werden. So kann $CO_2$ vorteilhaft zur Düsenkühlung der im Eisenbadreaktor verwendeten OBM-Düsen benutzt werden. Insbesondere vorteilhaft aber ist das Ausscheiden von $H_2S$, weil dadurch das Kohlegas nahezu schwefelfrei wird und sich somit beispielsweise für den Einsatz in der chemischen Industrie eignet. Das vorübergehend verflüssigte bzw. zumindest auf eine für das Ausfrieren von $H_2S$ notwendige, tiefe Temperatur gebrachte Kohlegas hat dadurch einen geringeren Schwefelgehalt als das bei den bekannten Kohlevergasungsverfahren den Verbrauchern zugeführte Kohlegas.

Das erfindungsgemässe Verfahren eignet sich neben der Kohlegaserzeugung im Eisenbadreaktor, für die es oben beschrieben wurde, auch für andere Vergasungsverfahren von festen oder flüssigen Brennstoffen, z.B. für das Fliessbettverfahren, das Festbettverfahren usw.

Sehr vorteilhaft erscheint eine noch tiefere Abkühlung des erzeugten Kohlegases über die Temperatur für das Abscheiden von $H_2S$ hinaus, um das Kohlegas in die flüssige Phase zu bringen, weil es in diesem Zustand wesentlich energiegünstiger komprimiert werden kann. Die für die Abkühlung bis zur Verflüssigung dem Kohlegas zu entziehende Wärme wird an das nach der Druckerhöhung wieder auf die Vergasungstemperatur zu erwärmende Kohlegas abgegeben, wobei wieder ein Wärmetauscher Verwendung findet. Da jedoch das wiederaufgewärmte Kohle-gas notwendigerweise eine geringere Tempera-tur hat als das Kohlegas vor der Verflüssigung und dem Komprimieren, wird eine Einrichtung zur Kühlung des Kohlegases vorgeschlagen, die überschüssige Wärme abführt. Hierbei kann es sich beispielsweise um eine Entspannungsstufe handeln.

Der Hauptvorteil der erfindungsgemässen Wechselspeicherung zwischen Kohle- bzw. Brenngas und Sauerstoff liegt auf der Energieseite: Bei dem erfindungsgemässen Verfahren wird die bei tiefer Temperatur vorhandene Wärmemenge möglichst konstant gehalten, so dass lediglich Isolationsverluste, Reibungsverluste usw. zu ersetzen sind. Besonders günstig läuft das erfindungsgemässe Verfahren mithin dann ab, wenn die pro Zeiteinheit dem Sauerstoff für des-sen Flüssigspeicherung zu entziehende Wärme-menge möglichst exakt derjenigen Wärmemenge gleich ist, die dem Brenngas bzw. Kohlegas für dessen Verdampfen auf Zimmertemperatur (bzw. im Bereich der Zimmertemperatur) zugeführt werden muss. Dann ist gewährleistet, dass die vorhandene «Kältemenge» zwischen Sauerstoff und Brenngas bzw. Kohlegas hin- und herwechselt, ohne verloren zu gehen. Dabei ist von den Gegenheiten des Kohlegaserzeu-gungsverfahrens auszugehen: Bei der Kohlever-gasung im Eisenbad als Beispiel werden zur Vergasung einer Tonne Kohle typischerweise 600 Nm³ Sauerstoff benötigt, es wird 2000 Nm³ Kohlegas gewonnen, das einen Energieinhalt von 5,6 Gcal hat. Besonders vorteilhaft ist es nun, wenn die zur Veflüssigung dieser 2000 Nm³ Kohlegas dem Kohlegas zu entziehende Wärmemenge derjenigen Wärmemenge entspricht, die 600 Nm³ Sauerstoff zugeführt werden muss, um es vom flüssigen Zustand, in dem es gespeichert ist, auf Einsatztemperatur, insbesondere Raumtemperatur, zu erwärmen. Da die Verflüssigung von Kohlegas aufgrund der sehr tiefen Liquidus-temperaturen von CO und insbesondere $H_2$ hohe «Kältemengen» verbraucht, ist trotz der etwas geringeren spezifischen Wärme des Kohlegases im Vergleich zum Sauerstoff die Wärmebilanz nicht ausgeglichen, d.h., für die Verflüssigung von 600 Nm³ Sauerstoff ist weniger «Kältemenge» erforderlich. Andererseits lassen sich Brenngase wie beispielsweise Erdgas schon bei Temperaturen um –50°C verflüssigen, sie haben zudem einen höheren Heizwert als das Kohlegas, so dass entsprechend dem Verhältnis der Heizwerte weniger als 2000 Nm³ Erdgas abgespeichert werden muss, um beim Verbraucher dieselbe Wärmemenge freisetzen zu können. Vorteilhaft wäre es nun, wenn man ein Brenngas, insbesondere Erdgas, wählen könnte, das in seiner, dem Heizwert von 2000 Nm³ Kohlegas entsprechenden Menge ebenso viel Wärmemenge zum Aufwärmen von der Temperatur im Speicher, in dem es flüssig gespeichert ist, auf eine Temperatur im Bereich von Zimmertemperatur benötigt, wie man an Wärmemenge für 600 Nm³ Sauerstoff braucht, um diese Menge von der flüssigen Lagertemperatur auf eine Temperatur im Bereich von Zimmertemperatur aufzuwärmen. Dabei kann ein Ausgleich der Wärmemengen auch dadurch stattfinden, dass die Sauerstoffmenge bzw. die Brenngasmenge unter die Liquidustemperatur abgekühlt wird, wodurch zusätzliche «Kältemenge» von ihr aufgenommen wird.

In der Praxis wird man mindestens zwei Gase, z.B. zwei Brenngase oder Brenngas und Kohlegas, miteinander mischen, um den Ausgleich hinsichtlich der «Kältemenge» und zugleich hinsichtlich des Heizwertes den betriebsbedingten Schwankungen anpassen zu können.

Besonders vorteilhaft wird die erfindungsgemässe Balance der beiden «Kältemengen», d.h. des flüssig gespeicherten Sauerstoffs auf der einen Seite und des flüssig gespeicherten Brenngases bzw. Kohlegases auf der anderen Seite, dann, wenn die Speichertemperaturen gleich sind. Auch dies kann durch eine geeignete Gasmischung, z.B. von Brenngas und Kohlegas, erreicht werden. Für den Fall gleicher Speichertemperaturen werden für den Wärmetausch keine Maschinen benötigt, die beispielsweise für die Verflüssigung von Sauerstoff die «Kältemenge» des bei –50°C gespeicherten Brenngases in eine «Kältemenge» mit einer Temperatur von etwa –200°C umwandeln. Die zwangsläufig entstehen-den Umwandlungsverluste werden somit vermie-den.

Schliesslich kann eine Balance der «Kältemengen» auch dadurch erreicht werden, dass ein zusätzliches Gas, z.B. Stickstoff, eingesetzt wird, das selbst nicht verbraucht wird, dessen Menge also konstant bleibt und das die jeweils überschüssigen Wärmemengen aufnimmt. Es wird also gleichzeitig oder im Gegentakt mit dem Sauerstoff verflüssigt bzw. aufgewärmt.

**Patentansprüche**

1. Verfahren zur Kohlegasversorgung eines industriellen Grossverbrauchers, insbesondere eines Hüttenwerkes, bei dem aus festen oder flüssigen Kohlenstoffträgern unter Zugabe von aus einer Sauerstoffleitung gasförmig bezogenem Sauerstoff und insbesondere in einem Eisenbad ein Kohlegas erzeugt wird, und das so erzeugte Kohlegas an Verbraucher, wie z.B. Industrieöfen, Heizungen, Beizen usw. geleitet wird, dadurch gekennzeichnet, dass für eine kontinuierliche Versorgung der Verbraucher

a) während der Kohlevergasung nur ein Teilstrom des erzeugten Kohlegases den Verbrauchern zugeführt wird, während ein anderer Teilstrom des erzeugten Kohlegases verflüssigt und gespeichert wird, aus einem Speicher in flüssiger Form gespeicherter Sauerstoff entnommen, bis zur Gasphase erwärmt und dem Eisenbadreaktor zugeleitet wird und wobei die zum Aufwärmen des Sauerstoffs notwendige Wärme dem zu verflüssigenden Kohlegas entzogen wird, und

b) bei Ausfall der Kohlevergasung die verflüssigte, gespeicherte Kohlegasmenge nach und nach aufgewärmt und den Verbrauchern zugeführt wird, aus der Sauerstoffzuleitung entnommener Sauerstoff verflüssigt und gespeichert wird, und wobei für das Aufwärmen des verflüssigten Kohlegases dem zu verflüssigenden Sauerstoff Wärme entzogen wird.

2. Verfahren nach Anspruch 1, dadurch gekennzeichnet, dass der Wasserstoffanteil des Kohlegases gasförmig, die bei höheren Temperaturen siedenden Anteile des Kohlegases in flüssiger Form gespeichert werden und dass bei Ausfall der Kohlevergasung diese Anteile vorzugsweise wieder gemischt werden.

3. Verfahren nach Anspruch 2, dadurch gekennzeichnet, dass der Wasserstoffanteil unter Druck und vorzugsweise in demselben Speicherbehälter wie die anderen, verflüssigten Anteile des Kohlegases gespeichert wird.

4. Verfahren nach einem der Ansprüche 1 bis 3, dadurch gekennzeichnet, dass die oberhalb der Verflüssigungstemperatur des Kohlegases bereits in den festen Aggregatzustand übergehenden Anteile des Kohlegases in einer geeigneten Vorrichtung bei einer Temperatur von etwas unterhalb ihrer Erstarrungstemperatur ausgeschieden werden.

5. Verfahren nach einem der Ansprüche 1 bis 4, dadurch gekennzeichnet, dass während der Kohlevergasung das gesamte, erzeugte Kohlegas bis auf eine Temperatur abgekühlt wird, in der sich $H_2O$ oder $CO_2$ oder $H_2S$ in fester Form abscheiden, wobei die dem Kohlegas für die Abkühlung zu entziehende Wärme dem nach erfolgter Abkühlung wieder aufzuwärmenden Kohlegas zugeführt wird.

6. Verfahren nach einem der Ansprüche 1 bis 5, dadurch gekennzeichnet, dass das erzeugte Kohlegas verflüssigt wird, in diesem Zustand komprimiert wird und anschliessend wieder bis zur Gasphase aufgewärmt wird, wobei die für die Verflüssigung dem Kohlegas zu entziehende Wärme für das nach der Verflüssigung und Komprimierung erfolgende Aufwärmen des Kohlegases eingesetzt wird.

7. Verfahren zur Brenngasversorgung eines industriellen Grossverbrauchers, insbesondere eines Hüttenwerkes, bei dem aus festen oder flüssigen Kohlenstoffen unter Zugabe von aus einer Sauerstoffzuleitung gasförmig bezogenem Sauerstoff und insbesondere in einem Eisenbadreaktor Kohlegas erzeugt wird, und das so erzeugte Kohlegas an Verbraucher, wie z.B. Industrieöfen, Heizungen, Beizen usw. geleitet wird, dadurch gekennzeichnet, dass

a) während der Gaserzeugung nur ein Teilstrom des tatsächlich benötigten Sauerstoffs unmittelbar der Sauerstoffzuleitung entnommen wird, während ein weiterer Teilstrom durch nach und nach erfolgendes Aufwärmen von in flüssiger Form gespeichertem Sauerstoff erhalten wird, aus einer Brenngaszuleitung, insbesondere Erdgaszuleitung bezogenes Brenngas verflüssigt und gespeichert wird, wobei die für das Aufwärmen des in flüssiger Form gespeicherten Sauerstoffs benötigte Wärme dem zu verflüssigenden Brenngas entzogen wird, und

b) bei Ausfall der Kohlevergasung die verflüssigte Brenngasmenge nach und nach aufgewärmt und den Verbrauchern zugeführt wird, aus der Sauerstoffzuleitung entnommener Sauerstoff verflüssigt und gespeichert wird, wobei zum Aufwärmen des flüssigen Brenngases dem zu verflüssigenden Sauerstoff Wärme entzogen wird.

8. Verfahren nach Anspruch 7, dadurch gekennzeichnet, dass das Brenngas so gewählt ist, dass diejenige Wärmemenge, die der stündlich verflüssigten und dem Gasspeicher zugeführten Menge an dem Brenngas entzogen werden muss, derjenigen Wärmemenge gleich ist, die pro Stunde der dem Sauerstoffspeicher entnommenen Sauerstoffmenge für deren Verflüssigung zugeführt werden muss.

9. Verfahren nach einem der Ansprüche 1 bis 7, dadurch gekennzeichnet, dass ein Gemisch an Brenngas und Kohlegas gespeichert wird, dessen Mischungsverhältnis so gewählt ist, dass diejenige Wärmemenge, die der stündlich verflüssigten und dem Speicher zugeführten Menge des Gasgemischs entzogen werden muss, derjenigen Wärmemenge gleich ist, die pro Stunde der dem Sauerstoffspeicher entnommenen Sauerstoffmenge für deren Verflüssigung zugeführt werden muss.

10. Verfahren nach einem der Ansprüche 1 bis 7, dadurch gekennzeichnet, dass die Differenz zwischen derjenigen Wärmemenge, die benötigt wird, um die dem Sauerstoffspeicher stündlich entnommene, flüssig gespeicherte Sauerstoffmenge aufzuwärmen und der Wärmemenge, die stündlich der dem Speicher zugeführten Brenngas- bzw. Kohlegasmenge für die Verflüssigung entzogen werden muss, von einem weiteren Gas aufgenommen bzw. abgegeben wird.

11. Verfahren nach einem der Ansprüche 1 bis 10, dadurch gekennzeichnet, dass die Speicherung des im flüssigen Zustand befindlichen Gases, also des Kohlegases, Brenngases oder Gasgemischs, bei derselben Temperatur wie die Speicherung des flüssigen Sauerstoffs und gegebenenfalls des weiteren Gases erfolgt.

**Claims**

1. A method for supplying coal gas to a large industrial consumer, in particular a smelting works, in which a coal gas is produced from solid or liquid carbon carriers with the addition of oxygen drawn in a gaseous state from an oxygen line and in particular in an iron bath, and the coal gas thus produced is conducted to consumers such as industrial furnaces, heating systems, pickling solutions, etc., characterized in that, for continuously supplying the consumers,

a) during the coal gasification only one stream of the coal gas produced is supplied to the consumers while another stream of the coal gas produced is liquefied and stored, stored oxygen is taken in a liquid state from a storage means, heated up to the gaseous phase and supplied to the iron bath reactor, and the heat required to heat the oxygen is extracted from the coal gas to be liquefied, and

b) during the downtime of the coal gasification the liquefied, stored amount of coal gas is heated gradually and supplied to the consumers, oxygen taken from the oxygen supply line is liquefied and stored, and heat is extracted from the oxygen to be liquefied to heat the liquefied coal gas.

2. The method according to claim 1, characterized in that the proportion of hydrogen in the coal gas is stored in the gaseous state and the parts of the coal gas which boil at higher temperatures are stored in the liquid state and in that these parts are preferably remixed in the downtime of the coal gasification.

3. The method according to claim 2, characterized in that the proportion of hydrogen is stored under pressure and preferably in the same storage vessel as the other, liquefied parts of the coal gas.

4. The method according to any of claims 1 to 3, characterized in that the parts of the coal gas which already pass into the solid state of aggregation above the liquefication temperature of the coal gas are eliminated in an appropriate apparatus at a temperature slightly lower than their solidification temperature.

5. The method according to any of claims 1 to 4, characterized in that during the coal gasification the entire coal gas produced is cooled to a temperature at which $H_2O$ or $CO_2$ or $H_2S$ forms a solid precipitate, the heat to be extracted from the coal gas for cooling being supplied to the coal gas to be reheated after the cooling is over.

6. The method according to any of claims 1 to 5, characterized in that the coal gas produced is liquefied, compressed in this state and then reheated up to the gaseous phase, the heat to be extracted from the coal gas for the liquefication being used to heat the coal gas as effected after the liquefication and compression.

7. A method for supplying fuel gas to a large industrial consumer, in particular a smelting works, in which coal gas is produced from solid or liquid carbons with the addition of oxygen drawn in the gaseous state from an oxygen supply line and in particular in an iron bath reactor, and the coal gas thus produced is conducted to consumers such as industrial furnaces, heating systems, pickling solutions, etc., characterized in that

a) during the production of the gas only one stream of the oxygen actually required is taken directly from the oxygen supply line while another stream is obtained by gradual heating of oxygen stored in the liquid state, fuel gas drawn from a fuel gas supply line, in particular a natural gas supply line, is liquefied and stored, the heat required to heat the oxygen stored in the liquid state being extracted from the fuel gas to be liquefied, and

b) during the downtime of the coal gasification the liquefied amount of fuel gas is heated gradually and supplied to the consumers, oxygen taken from the oxygen supply line is liquefied and stored, heat being extracted from the oxygen to be liquefied to heat the liquid fuel gas.

8. The method according to claim 7, characterized in that the fuel gas is selected such that the amount of heat which must be extracted from the amount of fuel gas liquefied per hour and supplied to the gas storage means is equal to the amount of heat which must be supplied per hour to the amount of oxygen taken from the oxygen storage means in order to liquefy said oxygen.

9. The method according to any of claims 1 to 7, characterized in that a mixture of fuel gas and coal gas is stored whose mixing proportion is selected such that the amount of heat which must be extracted from the amount of the gas mixture liquefied per hour and supplied to the storage means is equal to the amount of heat which must be supplied per hour to the amount of oxygen taken from the oxygen storage means in order to liquefy said oxygen.

10. The method according to any of claims 1 to 7, characterized in that the difference between the amount of heat required to heat the amount of oxygen taken per hour from the oxygen storage means and stored in the liquid state, and the amount of heat which must be extracted per hour for liquefication from the amount of fuel gas or coal gas supplied to the storage means is taken up or released by a further gas.

11. The method according to any of claims 1 to 10, characterized in that the storage of the gas, i.e. the coal gas, fuel gas or gas mixture, existing in the liquid state is effected at the same temperature as the storage of the liquid oxygen and optionally of the further gas.

**Revendications**

1. Procédé pour la distribution de gaz au charbon pour un gros consommateur industriel, notamment une usine métallurgique, selon lequel on produit un gaz au charbon à partir de matières carbonées solides ou liquides, avec addition d'oxygène prélevé à l'état gazeux sur une tuyauterie d'oxygène, et notamment dans un bain de fer, et on envoie le gaz au charbon ainsi produit aux consommateurs, comme par exemple des fours industriels, des installations de chauffage, des installations de décapage, etc., caractérisé en ce que pour une distribution continue aux consommateurs:

a) pendant la gazéification du charbon on n'envoie aux consommateurs qu'un courant partiel du gaz au charbon produit, tandis qu'on liquéfie et stocke un autre courant partiel du gaz au charbon produit, à partir d'un réservoir, on prélève de l'oxygène stocké sous forme liquide, on le réchauffe jusqu'à la phase gazeuse et on l'envoie à un réacteur au bain de fer et la chaleur nécessaire pour le réchauffement de l'oxygène est extraite du gaz au charbon à liquéfier, et

b) en cas d'arrêt de la gazéification du charbon on réchauffe progressivement la quantité de gaz au charbon liquéfiée et stockée et on l'envoie aux consommateurs, on liquéfie et stocke l'oxygène prélevé à partir de la conduite d'amenée d'oxygène et pour le réchauffement du gaz au charbon liquéfié, on extrait, de l'oxygène à liquéfier, de la chaleur.

2. Procédé selon la revendication 1, caractérisé en ce qu'on stocke sous forme gazeuse la fraction hydrogène du gaz au charbon, et sous forme liquide les fractions du gaz au charbon qui bouillent à des températures plus élevées, et en ce que, lors d'un arrêt de la gazéification du charbon, on mélange à nouveau de préférence ces fractions.

3. Procédé selon la revendication 2, caractérisé en ce qu'on stocke la fraction hydrogène sous pression et de préférence dans le même réservoir de stockage que les autres fractions du gaz au charbon liquéfiées.

4. Procédé selon l'une des revendications 1 à 3, caractérisé en ce qu'on sépare, à une température quelque peu au-dessous de leur température de solidification, les fractions du gaz au charbon passant déjà à l'état solide au-dessus de la température de liquéfaction du gaz au charbon, ceci dans un dispositif approprié.

5. Procédé selon l'une des revendications 1 à 4, caractérisé en ce que, pendant la gazéification du charbon, on refroidit l'ensemble du gaz au charbon produit jusqu'à une température à laquelle se sépare sous forme solide $H_2O$ ou $CO_2$ ou $H_2S$, la chaleur à extraire du gaz au charbon pour le refroidissement étant apportée au gaz au charbon à réchauffer à nouveau, une fois effectué le refroidissement.

6. Procédé selon l'une des revendications 1 à 5, caractérisé en ce qu'on liquéfie le gaz au charbon produit, on le comprime dans cet état et ensuite on le réchauffe à nouveau jusqu'à la phase gazeuse, la chaleur à extraire du gaz au charbon pour la liquéfaction étant utilisée pour le réchauffement du gaz au charbon s'effectuant après la liquéfaction et la compression.

7. Procédé de distribution de gaz combustible pour un gros consommateur industriel, notamment une usine métallurgique, selon lequel on produit du gaz au charbon à partir de matières carbonées solides ou liquides en ajoutant de l'oxygène prélevé sous forme gazeuse sur une conduite d'amenée d'oxygène, et notamment dans un réacteur au bain de fer, et on envoie le gaz au charbon ainsi produit aux consommateurs, comme par exemple des fours industriels, des installations de chauffage, des installations de décapage, etc., caractérisé en ce que:

a) pendant la production de gaz on ne prélève directement sur la conduite d'amenée d'oxygène qu'un courant partiel de l'oxygène effectivement nécessaire, tandis qu'on conserve un autre courant partiel par réchauffement s'effectuant progressivement d'oxygène stocké sous forme liquide, on liquéfie et stocke du gaz combustible prélevé à partir d'une conduite d'amenée de gaz combustible, notamment une conduite d'amenée de gaz naturel, la chaleur nécessitée par le réchauffement de l'oxygène stocké sous forme liquide étant extraite du gaz combustible à liquéfier, et

b) lors d'un arrêt de la gazéification du charbon, on réchauffe progressivement la quantité liquéfiée de gaz combustible et on l'envoie aux consommateurs, on liquéfie et stocke l'oxygène prélevé sur la conduite d'amenée de l'oxygène, la chaleur étant prélevée sur l'oxygène à liquéfier, pour le réchauffement du gaz combustible liquide.

8. Procédé selon la revendication 7, caractérisé en ce qu'on choisit le gaz combustible de façon que la quantité de chaleur qui doit être extraite de la quantité de gaz combustible qui est liquéfiée chaque heure et envoyée au réservoir de gaz, soit égale à la quantité de chaleur qui doit être apportée par heure, pour sa liquéfaction, à la quantité d'oxygène prélevée sur le réservoir d'oxygène.

9. Procédé selon l'une des revendications 1 à 7, caractérisé en ce qu'on stocke un mélange de gaz combustible et de gaz au charbon, dont on choisit la proportion de mélange de façon que la quantité de chaleur qui doit être extraite de la quantité de mélange de gaz qui est liquéfiée chaque heure et envoyée au réservoir, soit égale à la quantité de chaleur qui doit être envoyée par heure, pour sa liquéfaction, à la quantité d'oxygène prélevée sur le réservoir d'oxygène.

10. Procédé selon l'une des revendications 1 à 7, caractérisé en ce qu'est prélevée sur un autre gaz ou est dégagée la différence entre la quantité de chaleur qui est nécessaire pour réchauffer la quantité d'oxygène stockée à l'état liquide et prélevée chaque heure sur le réservoir d'oxygène, et la quantité de chaleur qui doit être extraite chaque heure, pour la liquéfaction, sur la quantité de gaz combustible ou gaz au charbon envoyée au réservoir.

11. Procédé selon l'une des revendications 1 à 10, caractérisé en ce que le stockage du gaz se trouvant à l'état liquide, à savoir du gaz au charbon, du gaz combustible ou du mélange de gaz, s'effectue à la même température que le stockage de l'oxygène liquide et éventuellement de l'autre gaz.